# EUROPÄISCHE PATENTSCHRIFT

(11) **EP 1 277 250 B1**
(45) Veröffentlichungstag und Bekanntmachung des Hinweises auf die Patenterteilung: **10.12.2003**
(21) Anmeldenummer: 01929594.8
(22) Anmeldetag: 20.04.2001
(51) Int. Cl.: H01M 10/40

(54) **VERFAHREN ZUR HERSTELLUNG VON WIEDERAUFLADBAREN LITHIUM-POLYMER-BATTERIEN UN DAMIT HERGESTELLTE BATTERIE**
METHOD FOR PRODUCING RECHARGEABLE LITHIUM-POLYMER BATTERIES AND A BATTERY PRODUCED ACCORDING TO SAID METHOD
PROCEDE PERMETTANT DE PRODUIRE DES BATTERIES AU LITHIUM-POLYMERE RECHARGEABLES ET BATTERIE AINSI PRODUITE

(30) Priorität: 22.04.2000 DE 10020031
(43) Veröffentlichungstag der Anmeldung: 22.01.2003
(73) Patentinhaber: Winterberg, Franz W., 99768 Ilfeld (DE)
(72) Erfinder: WINTERBERG, Franz, W., 99768 Ilfeld (DE); ZIMMERMANN, Reiner, 99734 Nordhausen (DE); SIURY, Kerstin, 01097 Dresden (DE)
(74) Vertreter: Enders, Hans, Dipl.-Ing.
(86) Internationale Anmeldenummer: EP0104540
(87) Internationale Veröffentlichungsnummer: WO01082403

(56) Entgegenhaltungen:
- EP-A- 0 858 119
- US-A- 5 296 318
- US-A- 5 456 000
- US-A- 5 631 103
- PATENT ABSTRACTS OF JAPAN vol. 2000, no. 08, 6. Oktober 2000 (2000-10-06) -& JP 2000 133271 A (MITSUBISHI RAYON CO LTD), 12. Mai 2000 (2000-05-12)
- PATENT ABSTRACTS OF JAPAN vol. 1998, no. 11, 30. September 1998 (1998-09-30) -& JP 10 172573 A (FURUKAWA ELECTRIC CO LTD:THE), 26. Juni 1998 (1998-06-26) in der Anmeldung erwähnt

## Beschreibung

Die Erfindung betrifft ein Verfahren zur Herstellung von wiederaufladbaren Lihium-Polymer-Batterien, die aus einer zusammengesetzten Anode, einem Polymer-Gel-Elektrolyt und einer zusammengesetzten Kathode bestehen, wobei die Aktivmaterialien der Elektroden aus Interkalationsgraphit (Anode) bzw. einem Lithium-Übergangsmetalloxid (Kathode) bestehen, sowie die damit hergestellte Batterie. Diese Batterieart ist aufgrund ihrer elektrischen Parameter, wie der hohen Energiedichte und einem verminderten Sicherheitsrisiko, in Vergleich zu Batterien die metallisches Lithium enthalten, für die Anwender von großem Interesse.

Eine wiederaufladbare Lithiumbatterie besteht im wesentlichen aus zwei Einlagerungselektroden, zwischen denen sich das Lithiumion durch einen Elektrolyten bewegt. Für die Kathode kommen hierbei vor allem Übergangsmetalloxide wie LiCoO₂, LiNiO₂ oder LiMn₂O₄ zum Einsatz. Für die Anode wird im allgemeinen Interkalationsgraphit verwendet. Der Elektrolyt besteht aus aprotischen organischen Lösungsmitteln, wie Ethylencarbonat (EC), Propylencarbonat (PC), Dimethylcarbonat (DMC) oder Diethylcarbonat (DEC), und einem Leitsalz, wie LiClO₄, LiPF₆, LiBF₄, oder LiCF₃SO₃.

Bei den bekannten Verfahren werden die Aktivmaterialien der Elektroden auf entsprechende Kollektorfolien unter Verwendung eines Trägerlösungsmittels schichtförmig aufgebracht. Nach Entfernung des Trägerlösungsmittels werden die beschichteten Kollektorfolien dann, getrennt durch eine poröse Separatorfolie, zur Batterie gewickelt. Die poröse Separatorfolie besteht z.B. aus Polyethylen oder Polypropylen und dient bei Gebrauch zur Aufnahme des flüssigen Elektrolyten, der den ionischen Kontakt herstellt.

Es ist auch bekannt, feste Elektrolyte aus einem Polymeren, z.B. Polyethylenoxid, und einem Leitsalz herzustellen. Die festen Polymerelektrolyte haben aber den Nachteil, das sie erst bei Temperaturen oberhalb von 60°C akzeptable Leitfähigkeiten aufweisen. Um mit der Batterie einen breiten Temperaturbereich abzudecken, ist es notwendig, eine Modifizierung der Polymerelektrolyte vorzunehmen, z.B. durch den Einsatz von Weichmacherlösungsmitteln, wie EC, PC, DEC oder DMC.

Bekannt ist auch der Einsatz von Poly[vinylidendifluorid-hexafluorpropylen] (VDF-HFP-Copolymer) als Polymermatrix in Polymer-Gel-Elektrolyten (Feuillade und Perch in J. Appl. Electrochem. 5, 63-69, 1975) für ein Li/CuS-System. Ein Nachteil der dort beschriebenen Verfahrensweise besteht jedoch darin, daß sowohl die Polymermatrix für den Elektrolyt als auch die positive Elektrode zunächst mit Hilfe eines Trägerlösungsmittels präpariert werden müssen und erst anschließend und nach Entfernung des Trägerlösungsmittels eine Imprägnierung mit einer NH₄ClO₄-Lösung in PC erfolgt.

In Patenten von Bell Communications Research, Inc. (US-A-5 192 629, US-A-5 296 318, US-A-5 456 000) wurde dieses Prinzip aufgegriffen und für das 4 V-System C/Elektrolyt/LiMn₂O₄ einer sogenannten PLion™ Batterie modifiziert. Das Verfahren beruht ebenfalls auf der Beschichtung mittels eines Trägerlösungsmittels und- nach Entfernung des Lösungsmittels- dem anschließenden Imprägnieren mit der Leitsalzlösung.

Das Patent DE 34 85 832 T2 von Cook et al. (entspricht EP 0 145 498 B1 und US-A-4 818 643) betrifft ein Verfahren zur Herstellung eines Polymer-Gel-Elektrolyten und einer Kathode ohne Verwendung eines Trägerlösungsmittels. Beide Komponenten werden über eine Düse in Folienform extradiert. Nachteile dieses Verfahrens bestehen jedoch in der Verwendung von Polyethylenoxid, einer mechanisch nicht stabilen Polymermatrix für die Herstellung des Polymer-Gel-Elektrolyten, und der Notwendigkeit von mehreren Verfahrensschritten, um den Gel-Elektrolyt, unter Verwendung einer Leitsalzlösung als "Weichmacher", herzustellen.

Bekannt ist auch aus US-A-5 725 822 die kontinuierliche Herstellung von Elektrodenmaterialien. Es handelt sich jedoch hierbei um ein Polymer-Elektrolyt-System, das als Polymermatrix reine Polymere wie Polyacrylnitril (PAN); Polyvinylidenfluorid (PVDF) oder Polyvinylpyrrolidon (PVP) vorsieht.

Verfahren zur Herstellung eines Polymerelektrolyten und dessen Beschichtung auf eine vorher präparierte Anode sind in den US-A-5 348 824 und 5 593 462 beschrieben. Hierbei handelt es sich nicht um einen Polymer-Gel-Elektrolyten, sondern um einen klassischen Polymer-Elektrolyt, der neben der Polymermatrix lediglich ein Leitsalz, aber keinen Gelbbildner enthält.

Das Patent JP 10 172 573 betrifft ein Verfahren zur Herstellung einer Anode mit Interkalationsgraphit. Als Bindemittel dient ein Polymerblend aus Polyvinylidenfluorid (PVDF) und Polymethlymethacrylat (PMMA). Her fungiert die Polymermatrix lediglich als Bindemittel für das Aktivmaterial der negativen Elektrode, und diese Elektrode wird mit einem flüssigen aprotischen Elektrolyt imprägniert. Es handelt sich somit nicht um eine Lithium-Polymer-Batterie mit einem Polymer-Gel-Elektrolyten, sondern um eine herkömmliche Lithium-Ionen-Batterie mit flüssigem Elektrolyt.

Bei den bekannten Verfahren, die unter Verwendung eines Trägerlösungsmittels arbeiten, wird nach der Herstellung der aktiven Schichten oder Filme das Trägerlösungsmittel wieder entfernt. Die gewickelte Batterie wird bis zu ihrem Gebrauch in inaktivem Zustand gehalten. Zur Aktivierung wird sie in eine Elektrolytlösung getaucht, wobei sich die durch das Austreiben des Lösungsmittels gebildeten Kavitäten mit dem flüssigen Elektrolyt füllen. Erst dann ist die Batterie gebrauchsfertig.

Eine Aufgabe der Erfindung besteht somit darin, die Nachteile der bekannten Verfahren zu vermeiden. Erfindungsgemäß gelingt dies dadurch, daß auf die Verwendung von Trägerlösungsmitteln gänzlich verzichtet wird, wobei für den Polymer-Gel-Elektrolyt ein Polymeres Verwendung findet, daß in dem Lösungsmittel der Leitsalzlösung quellbar ist. Darüber hinaus wird erfindungsgemäß die wiederaufladbare Lithium-Polymer-Batterie so hergestellt, daß in allen Komponenten ein mit Leitsalzlösung gequollenes Polymeres vorliegt, so daß die Batterie sofort gebrauchsfähig ist und eine spätere Imprägnierung mit Elektrolyt, wie bei den bekannten Verfahren, entbehrlich ist.

Gegenstand der Erfindung ist somit ein Verfahren zur trägerlösungsmittelfreien Herstellung von wiederaufladbaren Lithium-Polymer-Batterien, das dadurch gekennzeichnet ist, daß
- eine Kathodenaktivmasse, die als Aktivkomponente ein interkalationsfähiges Übergangsmetalloxid, eine Leitsalzlösung, einen Leitzusatz und ein in der Leitsalzlösung quellfähiges Polymeres enthält,
- eine Anodenaktivmasse, die als Aktivkomponente ein interkalationsfähiges Material, eine Leitsalzlösung und ein in der Leitsalzlösung quellfähiges Polymeres enthält, und
- ein Polymer-Gel-Elektrolyt, der eine Leitsalzlösung und ein in der Leitsalzlösung quellfähiges Polymeres enthält,
durch Vermischen der jeweiligen Komponenten separat hergestellt werden,
- die drei Massenschichten für die Anode, den Polymer-Gel-Elektrolyt und die Kathode dann zusammengerührt und
- die Anode, der Polymer-Gel-Elektrolyt und die Kathode auf Kollektorfolien laminiert werden.

Weiterhin ist Gegenstand der Erfindung eine wiederaufladbare Lithium-Polymer-Batterie, gekennzeichnet durch folgenden Aufbau:
- eine Kollektorfolie
- eine Kathodenaktivmasse, die als Aktivkomponente ein interkalationsfähiges Übergangsmetalloxid, einen Leitzusatz und ein in Leitsalzlösung gequollenes Polymeres enthält,
- ein Polymer-Gel-Elektrolyt aus in Leitsalzlösung gequollenem Polymeren,
- eine Anodenaktivmasse, die als Aktivkomponente ein interkalationsfähiges Material und ein in Leitsalzlösung gequollenes Polymeres enthält, und
- eine Kollektorfolie.

Herkömmliche Lithium-Ionen-Batterien zeichnen sich dadurch aus, daß die Elektroden durch Beschichtung unter Verwendung eines Trägerlösungsmittels erhalten werden, und die ionische Leitfähigkeit dadurch gewährleistet wird, daß die beim späteren Verdampfen des Trägerlösungsmittels entstehenden Kavitäten mit einer Leitsalzlösung gefüllt werden. Die beiden Elektroden werden elektronisch durch ein porösen Separator voneinander getrennt, der aus einem nichtquellbaren Polymeren, wie Polyethylen oder Polypropylen, besteht.

Die nach dem Verfahren der Bell Communications Research Inc. hergestellten Lithium-Polymer-Batterien enthalten ebenfalls Elektroden, die nach dem oben beschriebenen Trägerlösungsmittel-Verfahren erhalten werden. Als Separator dient ein Polymeres, das zunächst mit einem Weichmacher vermischt wird, wobei nach dem Herauslösen des Weichmachers die so erzeugte poröse Strucktur ebenfalls mit einer Leitsalzlösung aufgefüllt wird.

Im Gegensatz dazu ist in der erfindungsgemäßen Batterie die Leitsalzlösung im gequollenen Polymeren fixiert. Deutlich sichtbar ist der Unterschied, wenn man die Batterien öffnet. Bei den herkömmlichen Lithium-Batterien tritt die Leitsalzlösung aus, und die feuchten Elektroden lassen sich vom Separator ablösen, es gibt also keine innige Verbindung zwischen Elektroden und Separator. Bei den erfindungsgemäß hergestellten Batterien bleiben die Elektroden mit dem Polymer-Gel-Elektrolyt verbunden und, da die Leitsalzlösung durch Quellung im Polymeren enthalten (gebunden) ist, kommt es auch nicht zum Austritt von Leitsalzlösung.

Erfindungsgemäß finden im Polymer-Gel-Elektrolyt und in den Elektrodenaktivmassen in der Leitsalzlösung quellfähige Polymere Verwendung. Hierbei können in den drei Batteriekomponenten entweder unterschiedliche Polymere oder das gleiche Polymere Verwendung finden.

Die Quellfähigkeit der Polymeren in der Leitsalzlösung dient dazu, diese Leitsalzlösung durch Quellung im Polymeren aufzunehmen. Im allgemeinen beträgt hierbei in dem gequollenen Polymeren das Gewichtsverhältnis von Polymerem zu Leitsalzlösung 10 - 90 zu 90 - 10, vorzugsweise 30 - 85 zu 70 - 15 und besonders bevorzugt 50 - 80 zu 50 - 20. Bei Unterschreitung der unteren Grenze der Leitsalzlösung wird die ionische Leitfähigkeit des Polymerelektrolyten bei Raumtemperatur zu gering (z.B. weniger als 1 mS/cm), so daß dann eine eingeschränkte Funktion der Batterie vorliegt. Oberhalb der oberen Grenze der Leitsalzlösung ist die mechanische Stabilität des Polymerelektrolyten herabgesetzt, und die Separatorfunktion damit eingeschränkt.

Die Art des verwendeten Polymeren unterliegt an sich keiner besonderen Beschränkung, soweit die angegebene Quellfähigkeit in der Leitsalzlösung gegeben ist. Die spezielle Auswahl richtet sich dann nach weiteren Gesichtspunkten, z.B. der Gewährleistung einer ausreichenden Haftung der Elektrodenaktivmassen auf den Kollektorfolien und der Batteriekomponenten untereinander. So können z.B. anstelle von Polymeren oder Copolymeren (z.B. Polyvinylpyrrolidon-covinylacetat) auch Polymerblends Verwendung finden. Geeignete Beispiele für Polymerblends sind Polyvinylidenfluorid (PVDF) mit Polyacrylnitril (PAN) und, Polyvinylidenfluorid- Hexafluorpropylen (PVDF-HFP) mit Polymethylmethacrylat (PMMA). In der Praxis haben sich fluorhaltige Homopolymere, Copolymere oder Polymerblends besonders bewährt. Beispiele hierfür sind Polyvinylidenfluorid (PVDF), Copolymere aus Vinylidenfluorid und Hexafluorpropylen (VDF-HFP-Copolymere, im Handel unter der Bezeichnung Kynar 2801 erhältlich), Polymerblends aus VDF-HFP-Copolymeren und Polyacrylnitril (PAN), z.B. in einem Mischungsverhältnis PVDF-HFP:PAN von 85:15 Gew.-%, und Polymerblends aus VDF-HFP-Copolymeren und Polymethylmethacrylat (PMMA). Letztere haben sich in der Praxis besonders gut bewährt, weil hiermit auch eine sehr gute Haftung erzielt wird. Vorzugsweise wird hierbei ein Polymerblend aus 40 bis 95 Gew.-% PVDF-HFP und 60 bis 5 Gew.-% PMMA verwendet; wobei die besonders bevorzugten Mischungsverhältnisse 60 bis 85 Gew.-% PVF-HFP und 40 bis 15 Gew.-% PMMA betragen.

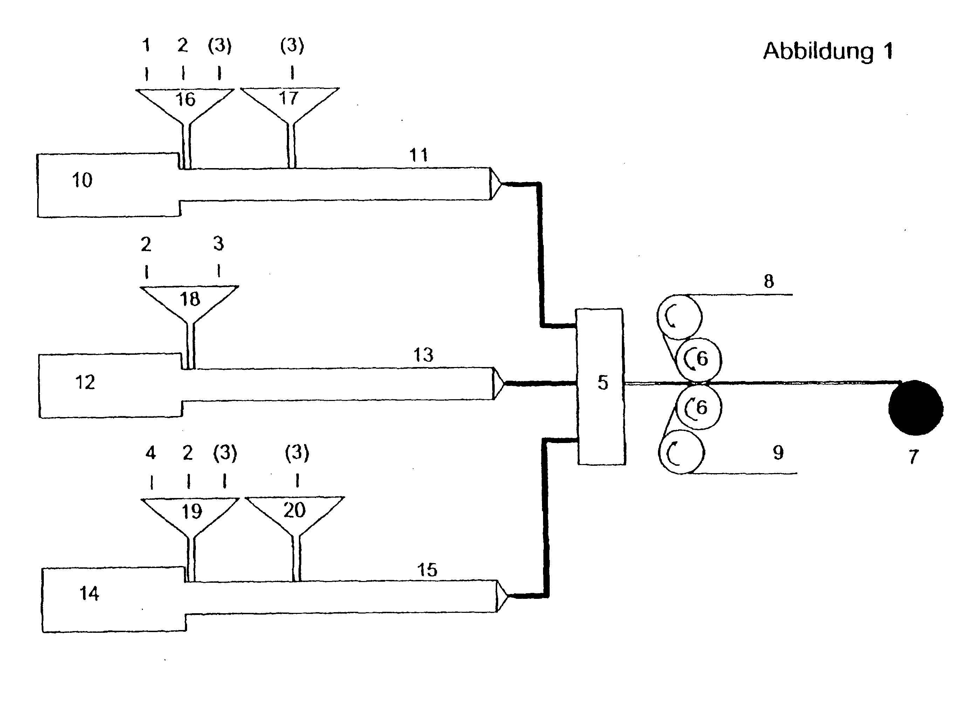

Erfindungsgemäß erfolgt die Verarbeitung der Elektrodenaktivmassen und des Polymer-Gel-Elektrolyten bei einer Temperatur, bei der diese Batteriekomponenten thermoplastisch verformbar sind, wobei die geeignete Verformungstemperatur insbesondere von der Art der verwendeten Polymeren abhängt. Die Aufbereitung (Vermischen) der drei Batteriekomponenten kann in allen herkömmlichen beheizbaren Mischagregaten erfolgen, wie Kneter und Extruder. Bevorzugt sind Extruder, da hiermit eine kontinuierliche Produktionsführung möglich ist. Die Mischagregate verfügen im allgemeinen über Einzugs-, Misch- und Austragszonen, die jeweils seperat beheizt werden können. Nach Maßgabe des Ortes der Zugabe der Ausgangsstoffe erfolgt ihre Vermischung bereits in einer ersten oder einer weiteren Einzugszone oder erst in sich an die Einzugszonen anschließenden Mischzonen. Im allgemeinen werden Temperaturen zwischen 95 und 165°C angewendet, um eine thermoplastische Verarbeitung zu gewährleisten. Der bevorzugte Temperaturbereich hängt hierbei von der Art des quellfähigen Polymeren und der Leitsalzlösung ab. Vorzugsweise werden in den Mischzonen Temperaturen von 100 bis 150°C, und in der Austragszone von 95 bis 110°C verwendet, um ein Verdampfen des Lösungsmittels der Leitsalzlösung zu verhindern. Die Elektrodenaktivmassen werden jeweils über eine Austragsdüse aus dem Mischagregat ausgebracht. Es ergeben sich mehrere Möglichkeiten der Weiterverarbeitung. Eine Möglichkeit besteht darin, die Elektrodenschichten zunächst einzeln auf Metallfolien (Stromkollektoren) aufzubringen und den Polymer-Gel-Elektrolyt auf eine Trägerfolie zu beschichten. Während des Wickelprozesses werden dann die auf den Metallfolien befindlichen Elektrodenschichten mit dem Polymer-Gel-Elektrolyt zusammengeführt. Bevorzugt ist aber die Verwendung einer Co-Extrusionsdüse, wie in Abb. 1 dargestellt. Dabei werden die Elektrodenschichten sofort mit der Polymer-Gel-Elektrolytschicht zusammengeführt. Auf diesen Verbund werden dann die Metallfolien kaschiert.

Die in den drei Batteriekomponenten verwendeten quellfähigen Polymeren müssen nicht zwangsläufig die gleichen sein. In manchen Fällen kann sogar eine spezielle Anpassung der Zusammensetzung der Elektrodenaktivmassen bezüglich der Haftung auf den Stromkollektoren von Vorteil sein. Hingegen sind die Komponenten der Leitsalzlösung vorzugsweise identisch, um Diffusionsprozesse in der Zelle zu vermeiden, die die elektrochemischen Prozesse überlagern könnten.

Geeignete Lösungsmittel für die Leitsalzlösung sind Ethylencarbonat (EC), Propylencarbonat (PC), Dimethylcarbonat (DMC), Diethylcarbonat (DEC), N-Methylpryrrolidon (NMP) oder γ-Butyrolacton (γ-BL), und Gemische hiervon.

Geeignete Lithiumsalze für die Leitsalzlösung sind LiClO₄, LiPF₆, LiBF₄ und LiCF₃SO₃. LiClO₄ ist aus ökonomischen Gründen bevorzugt.

Weitere Einzelheiten zu geeigneten Lösungsmitteln und Leitsalzen sind in dem Standardwerk "Lithium Batteries - New Materials, Developments and Perspectives" ed. by G.Pistoia, Industrial Chemistry Library Vol. 5, Elsevier Science, Amsterdam 1994 beschrieben.

Als interkalationsfähiges Material der Anodenaktivmasse dienen z.B. Petrolkoks, natürlicher oder synthetischer Graphit (Interkalationsgraphit), oder Gemische hiervon. Interkalationsgraphit ist bevorzugt.

Zur Erzielung besonders guter elektrochemischer Eigenschaften der Anodenaktivmasse wird die Konzentration der Leitsalzlösung vorzugsweise auf den jeweiligen Interkalationsgraphit abgestimmt. Vorzugsweise werden hierbei 20 bis 250 mg Leitsalzlösung/m² Interkalationsgraphit verwendet.

Bei dem interkalationsfähigen Übergangsmetalloxid der Kathodenaktivmasse handelt es sich z.B. um LiCoO₂, LiNiO₂ oder LiMn₂O₄. Hierbei ist der Lithium-Mangan-Spinell aus ökonomischen und ökologischen Gründen bevorzugt. Weitere Einzelheiten zu geeigneten interkalationsfähigen Übergangsmetalloxiden sind in dem Standardwerk "Lithium Batteries ― New Materials, Developments and Perspectives" ed. by G.Pistoia, Industrial Chemistry Library Vol. 5, Elsevier Science, Amsterdam 1994 beschrieben.

Als elektronischer Leitzusatz findet vorzugsweise Leitruß Verwendung; geeignete Produkte sind im Handel erhältlich.

Die Vorteile der Erfindung bestehen darin, daß die Komponenten der Lithium-Polymer-Batterie, die Elektroden (Anode und Kathode) und der Polymer-Gel-Elektrolyt, ohne die Verwendung von Trägerlösungsmittel, hergestellt werden können. Der Verzicht auf die ökologisch bedenklichen Lösungsmittel, wie Dimethlyformamid, Dimethylacetamid, N-Methylpyrrolidon oder Tetrahydrofuran, reduziert auch entscheidend die Kosten zur Herstellung von Lithium-Polymer-Batterien. Weiterhin entfallen kostenintensive Rückgewinnungs- und Reinigungsanlagen für die Lösungsmittel. Des weiteren ist ein wesentlicher ökonomischer Vorteil des erfindungsgemäßen Herstellungsverfahrens für Lithium-Polymer-Batterien darin zu sehen, daß bekannte Aggregate der Kunststoffverarbeitung, wie Extruder oder Kneter, verwendet werden können.

Nachfolgend ist die Erfindung an Hand der Zeichnungen beschrieben. Es zeigen:
Abbildung 1 eine schematische Darstellung des Verfahrens der Erfindung, und
Abbildung 2 eine schematische Darstellung einer erfindungsgemäß hergestellten wiederaufladbaren Lithium-Polymer-Batterie.

In Abbildung 1 haben die Bezugsziffern folgende Bedeutung:
- 1: Interkalationsgraphit
- 2: Leitsalzlösung
- 3: Polymeres
- 4: Übergangsmetalloxid plus Leitzusatz
- 5: Austragsdüse
- 6: Kaschierwalzen
- 7: Lithium-Polymer-Zelle
- 8: Stromkollektoren
- 9: Stromkollektoren
- 10: Mischer für Anodenaktivmasse
- 11: Anodenaktivmasse
- 12: Mischer für den Polymer-Gel-Elektrolyt
- 13: Polymer-Gel-Elektrolyt
- 14: Mischer für Kathodenaktivmasse
- 15: Kathodenaktivmasse
- 16: 1.Einzugszone für die Anodenaktivmasse
- 17: 2.Einzugszone für die Anodenaktivmasse
- 18: 1.Einzugszone für den Polymer-Gel-Elektrolyt
- 19: 1.Einzugszone für die Kathodenaktivmasse
- 20: 2.Einzugszone für die Kathodenaktivmasse

Das Mischen der einzelnen Bestandteile der Elektrodenmassen erfolgt in kontinuierlich arbeitenden Kunststoffverarbeitungsmaschinen.

Die Herstellung der Anodenaktivmasse (11) erfolgt durch gemeinsame Zugabe der Leitsalzlösung (2) und des Interkalationsgraphites (1) in der 1. Einzugszone (16) des kontinuierlichen Mischers für die Anodenaktivmasse (10). Die Dosierung des Polymeren (3) kann optional teilweise oder vollständig in der 1. Einzugszone (16) oder teilweise oder vollständig in der 2. Einzugszone (17) erfolgen, an der bereits eine Vermischung der in der 1. Einzugszone (16) dosierten Komponenten stattfand.

Die Herstellung des Polymer-Gel-Elektrolyts (13) erfolgt durch gemeinsames Dosieren der Leitsalzlösung (2) und des Polymeren (3) in der 1. Einzugszone (18) des kontinuierlichen Mischers für den Polymer-Gel-Elektrolyt (12). Die Leitsalzlösung (2) für den Polymer-Gel-Elektrolyt (13) ist identisch mit der für die Anoden- und Kathodenaktivmasse (11; 15) verwendeten. Als Polymere können z.B. Blends (Gemische) aus PVDF-HFP und PMMA, und zwar in den Elektrodenaktivmassen und im Polymer-Gel-Elektrolyt (13) auch in unterschiedlichen Verhältnissen, eingesetzt werden.

Zur Herstellung der Kathodenaktivmasse (15) werden die Leitsalzlösung (2) sowie das Gemisch aus Lithium-Mangan-Spinell (interkalationsfähiges Übergangsmetalloxid) und elektronischem Leitzusatz (4) gemeinsam in der 1. Einzugszone (19) des kontinuierlichen Mischers für die Kathodenaktivmasse (14) dosiert. Die Zugabe der Polymeren (3) kann optional teilweise oder vollständig in der 1. Einzugszone (19) oder teilweise oder vollständig in der 2. Einzugszone (20) erfolgen, an der bereits eine Vormischung der in der 1. Einzugszone (19) dosierten Komponenten stattfand.

Die einzelnen Batteriekomponenten Anodenaktivmasse (11), Polymer-Gel-Elektrolyt (13) und Kathodenaktivmasse (15) werden durch die Austragsdüse (5) in die entsprechende Form hinsichtlich Breite und Schichtdicke überführt. Im anschießenden Verfahrensschritt werden über Kaschierwalzen (6) die in der Austragsdüse (5) erzeugten Schichten auf die Stromkollektoren (8, 9) laminiert. Bei den Stromkollektoren handelt es sich um eine Kupferfolie oder Kupfernetz (8) bzw. um Aluminiumfolie oder Aluminiumnetz (9). Abschließend erfolgt das Wickeln der Lithium-Polymer-Zelle (7).

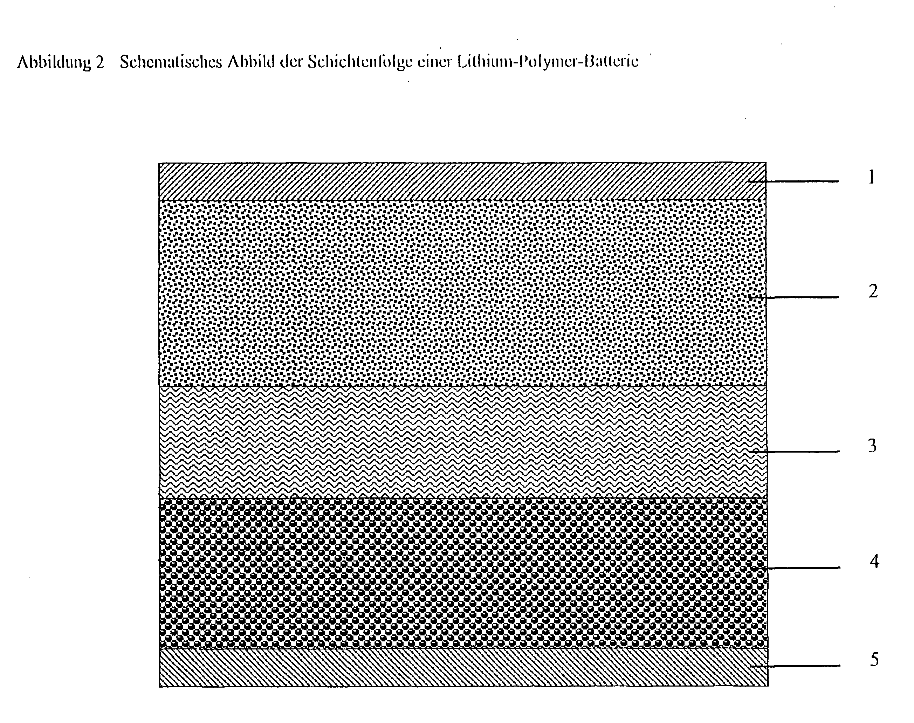

In Abb. 2 haben die Bezugsziffern folgende Bedeutung:
1 - Stromkollektor (Aluminiumfolie)
2 - Positive Elektrode, mit
   - Übergangsmetalloxid (Li-Mn-Spinell)
   - elektronischer Leitzusatz (Leitruß)
   - mit Leitzsalzlösung gequollenes Polymeres
3 - Polymer-Gel-Elektrolyt
4 - Negative Elektrode, mit
   - Interkalationsgraphit
   - mit Leitsalzlösung gequollenes Polymeres/Polymerblend
5 - Stromkollektor (Kupferfolie).

Die Beispiele erläutern die Erfindung.

### Beispiel 1

Beispiel 1 zeigt die Herstellung von Elektrodenaktivmassen und des Polymer-Gel-Elektrolyten der unten aufgeführten Zusammensetzung mit kontinuierlichen Mischem gleicher Bauart. Für alle drei Batteriekomponenten wurde jeweils ein kontinuierlich arbeitender Kneter "CONTERNA" der Firma IKA eingesetzt, der mit Zahnradpumpe und Austragsdüse (getrennt beheizbar) ausgerüstet ist. Bei dem Handelsprodukt Kynar 2801 handelt es sich um ein VDF-HFP-Copolymeres, und bei dem Handelsprodukt Plex 6770 um PMMA.

| Anode | Gew.-% | Elektrolyt | Gew.-% | Kathode | Gew.-% |
|---|---|---|---|---|---|
| Graphit | 53 | | | LiMn₂O₄ | 65 |
| | | | | Leitruß | 6,5 |
| Kynar 2801 | 6,5 | Kynar 2801 | 21 | Kynar 2801 | 4 |
| Plex 6770 | 10 | Plex 6770 | 14 | Plex 6770 | 6 |
| LiClO₄ | 2,5 | LiClO₄ | 5,4 | LiClO₄ | 1,5 |
| EC | 14 | EC | 29,8 | EC | 8,5 |
| γ-BL | 14 | γ-BL | 29,8 | γ-BL | 8,5 |

Die Herstellung der Anodenaktivmasse erfolgt durch gemeinsame Zugabe der Leitsalzlösung (2), des Interkalationsgraphits (1) und der Polymermischung (3) in der Einzugszone (16) des kontinuierlichen Kneters (10).

Die Herstellung des Polymer-Gel-Elektrolyts erfolgt durch gemeinsames Dosieren der Leitsalzlösung (2) und der Polymeren (3) in der Einzugszone (18) des kontinuierlichen Kneters (12).

Zur Herstellung der Kathodenaktivmasse werden die Leitsalzlösung (2) sowie das Gemisch aus Lithium-Mangan-Spinell und elektronischem Leitzusatz (4) und die Polymeren (3) gemeinsam in die Einzugszone (19) des kontinuierlichen Kneters (14) dosiert.

Mittels Zahnradpumpen werden die Elektrodenaktivmassen und der Polymer-Gel-Elektrolyt der Austragsdüse und dann den Stromkollektoren (8, 9) zugeführt, worauf mittels Kaschierwalzen (6) Laminieren und Wickeln zur elektrochemischen Zelle (7) erfolgt.

### Beispiel 2

Gemäß der Zusammensetzung aus Beispiel 1 werden die Elektrodenaktivmassen mit kontinuierlich arbeitenden Ko-Knetem der Firma BUSS hergestellt, während für den Polymer-Gel-Elektrolyten ein Doppelwellenextruder der Firma Collin zum Einsatz kommt.

Die Herstellung der Anodenaktivmasse erfolgt durch gemeinsame Zugabe der Leitsalzlösung (2), des Interkalationsgraphits (1) und der Polymeren (3) in der Einzugszone (16) des BUSS-Ko-Kneters (10).

Die Herstellung des Polymer-Gel-Elektrolyten erfolgt durch gemeinsames Dosieren der Leitsalzlösung (2) und der Polymeren (3) in der Einzugszone (18) des Doppelwellenextruders (12).

Zur Herstellung der Kathodenaktivmasse werden die Leitsalzlösung (2) sowie das Gemisch aus Lithium-Mangan-Spinell und elektronischem Leitzusatz (4) und das PMMA (3) gemeinsam in der Einzugszone (19) des BUSS-Ko-Kneters (14) dosiert. Die Zugabe des PVDF-HFP (3) erfolgt an der Einzugszone (20), einer Stelle, an der bereits eine Vormischung der in der Einzugszone (19) dosierten Komponenten erfolgt ist.

In der gleichen Verfahrensweise wie im Beispiel 1 wird dann eine elektrochemische Zelle gewickelt.

In den Beispielen 1 und 2 ist die Herstellung von Lithium-Polymer-Zellen beschrieben. Diese gewickelten Zellen wurden über die Stirnflächen der Wickel elektrisch kontaktiert und in Edelstahl gehäuse eingeschweißt. Die elektrochemische Charakterisierung der Zellen wurde mit einem Batterietestgerät der Firma Digatron vorgenommen. Die Ladung erfolgte zunächst galvanostatisch mit einem Strom von 0,15 mA/cm² bis 4,3 V und anschließend für 2 h potentiostatisch bei dieser Spannung. Die Entladung der Zellen wurde mit einem Strom von 0,15 mA/cm² bis zur Abschaltspannung von 3,5 V vorgenommen.

Die Zelle aus Beispiel 1 hat eine Nominalkapazität von 15 Ah, eine beschichtete Aktivfläche von 0,75 m² und bei einer Beschichtungsbreite von 15 cm einen Durchmesser von 4,7 cm. Die erste Entladekapazität betrug 14,4 Ah. Das entspricht 96% der nominalen Kapazität.

Die Zelle aus Beispiel 2 hat eine Nominalkapazität von 30 Ah, eine beschichtete Aktivfläche von 1,5 m² und bei einer Beschichtungsbreite von 15 cm einen Durchmesser von 6,6 cm. Die erste Entladekapazität betrug 29,2 Ah. Das entspricht 97% der nominalen Kapazität.

## Patentansprüche

1. Verfahren zur trägerlösungsmittelfreien Herstellung von wiederaufladbaren Lithium-Polymer-Batterien, **dadurch gekennzeichnet, daß**
- eine Kathodenaktivmasse, die als Aktivkomponente ein interkalationsfähiges Übergangsmetalloxid, eine Leitsalzlösung, einen Leitzusatz und ein in der Leitsalzlösung quellfähiges Polymeres enthält,
- eine Anodenaktivmasse, die als Aktivkomponente ein interkalationsfähiges Material, eine Leitsalzlösung und ein in der Leitsalzlösung quellfähiges Polymeres enthält, und
- ein Polymer-Gel-Elektrolyt, der eine Leitsalzlösung und ein in der Leitsalzlösung quellfähiges Polymeres enthält,
durch Vermischen der jeweiligen Komponenten separat hergestellt werden,
- die drei Massenschichten für die Anode, den Polymer-Gel-Elektrolyt und die Kathode dann zusammengeführt und
- die Anode, der Polymer-Gel-Elektrolyt und die Kathode auf Kollektorfolien laminiert werden.

2. Verfahren nach Anspruch 1, **dadurch gekennzeichnet, daß** der Polymer-Gel-Elektrolyt 20 bis 60 Gew.-% Polymeres und 80 bis 40 Gew.-% Leitsalzlösung enthält.

3. Verfahren nach Anspruch 1 oder 2, **dadurch gekennzeichnet**, das in den Elektrodenaktivmassen und im Polymer-Gel-Elektrolyt jeweils das gleiche Polymere enthalten ist.

4. Verfahren nach einem der Ansprüche 1 bis 3, **dadurch gekennzeichnet, daß** das Polymere ein Polymerblend aus 40 bis 95 Gew.-% Poly[vinylidendifluoridhexafluorpropylen] (PVF-HFP) und 60 bis 5 Gew.-% Polymethylmethacrylat (PMMA) ist.

5. Verfahren nach Anspruch 4, **dadurch gekennzeichnet, daß** das Polymerblend 60 bis 8 5 Gew.-% PVF-HFP und 40 bis 15 Gew.-% PMMA enthält.

6. Verfahren nach einem der Ansprüche 1 bis 5, **dadurch gekennzeichnet, daß** als Lösungsmittel für die Leitsalzlösung Ethylencarbonat, Propylencarbonat, Dimethylcarbonat, Diethylcarbonat, N-Methylpyrrolidon oder γ-Butyrolacton, oder ein binäres oder temäres Gemisch hiervon, dient.

7. Verfahren nach einem der Ansprüche 1 bis 6, **dadurch gekennzeichnet, daß** als Leitsalz der Leitsalzlösung ein Lithiumsalz aus der Gruppe LiClO₄, LiPF₆ und LiCF₃SO₃ dient.

8. Verfahren nach einem der Ansprüche 1 bis 7, **dadurch gekennzeichnet, daß** als interkalationsfähiges Material der Anodenaktivmasse natürlicher oder synthetischer Graphit oder ein Gemisch hiervon dient

9. Verfahren nach einem der Ansprüche 1 bis 7, **dadurch gekennzeichnet, daß** als interkalationsfähiges Übergangsmetalloxid der Kathodenaktivmasse LiCoO₂, LiNiO₂ oder LiMn₂O₄ dient.

10. Wiederaufladbare Lithium-Polymer-Batterie, **gekennzeichnet durch** folgenden Aufbau:
- eine Kollektorfolie
- eine Kathodenaktivmasse;
- ein Polymer-Gel-Elektrolyt,
- eine Anodenaktivmasse und
- eine Kollektorfolie
herstellbar **durch** ein Verfahren für wiederaufladbaren Lithium-Polymer-Batterien, das auf die Verwendung von Trägerlösungsmitteln verzichtet und die Komponenten, wie in Anspruch 1 beschrieben, laminiert werden.

11. Lithium-Polymer-Batterie nach Anspruch 10, herstellbar durch ein Verfahren, wie in einem oder mehreren der Ansprüche 2 - 9 definiert.

## Claims

1. A solvent free process to supply rechargeable lithium polymer batteries, the process being **characterized by** a separate preparation of
- a cathode substance, which contains as components an active cathode materials being a transitional metal oxide able to intercalate lithium, an electrolyte salt solution,
a conductive additive and a polymer being able to gel in the electrolyte salt solution
- an anode substance, which contains as components an active anode material being able to intercalate lithium, an electrolyte salt solution and a polymer being able to gel in the electrolyte salt solution
- and a polymer gel electrolyte substance, which contains as components an electrolyte salt solution and a polymer being able to gel in the electrolyte salt solution,
where the cathode-, the anode- and the polymer electrolyte substance are prepared by mixing of the components, followed by
- joining the layers of the anode-, the polymer gel electrolyte- and the cathode substance to each other and
- laminating the layers onto current collector foils.

2. The process according claim 1 further **characterized by** a polymer gel electrolyte consisting of 20-60 % by weight are polymer and 80-40 by weight are electrolyte salt solution.

3. Process according claim 1 or 2 further **characterized by** cathode, anode and polymer gel electrolyte containing the same polymer.

4. Process according one of the claims 1-3 further **characterized by** a polymer gel electrolyte consisting of a mixture of 40-95 % by weight poly[vinylidentifluorid-hexaflouropropylen] (PVDF-HFP) and 60-5 % by weight by weight polymethyl methacrylate (pmma).

5. Process according claim 4, further **characterized by** a polymer mixture containing 60-85 % by weight PVF-HFP and 40-15 % by weight PMMA.

6. Process according one of the claims 1-5, further **characterized by** an electrolyte salt solution containing ethylene carbonate, propylene carbonate, dimethyl carbonate, diethyl carbonate, N-Methylpyrrolidon or Gamma-butyrolacton, or a binary or a ternary mixture thereof as solvent.

7. Process according one of the claims 1-6, further **characterized by** a electrolyte salt being a lithium salt chosen from one ore more of LiClO₄, LiPF₆, LiCF₃ SO₃ .

8. Process according one of the claims 1-7, further **characterized by** the application of an anode intercalation material being natural or synthetic graphite, or mixtures whereof.

9. Process according one of the claims 1-7, further **characterized by** the application of an cathode intercalation material being LiCoO₂ , LiNiO₂ or LiMn₂O₄ .

10. Rechargeable lithium polymer battery **characterized by** being composed of
- a current collector foil
- a cathode substance which contains a transition metal oxide as active cathode intercalation material, a conductive additive and a polymer gelled in the electrolyte salt solution
- a polymer gel electrolyte substance consisting of a polymer gelled in the electrolyte salt solution
- a anode substance which contains a intercalations material and a polymer gelled in the electrolyte salt solution
- a current collector foil.

11. Lithium polymer battery according claim 10, manufacture through a process according as defined in at least one of the claim 2-9.

## Revendications

1. Procédé pour la fabrication, sans solvant porteur, de piles rechargeables au lithium-polymère, **caractérisé en ce qu'**on prépare séparément
- une matière active de cathode, qui contient en tant que composant actif un oxyde d'un métal de transition apte à l'intercalation, une solution d'un sel conducteur, un additif conducteur et un polymère susceptible de gonfler dans la solution de sel conducteur,
- une matière active d'anode, qui contient en tant que composant actif un matériau apte à l'intercalation, une solution d'un sel conducteur, et un polymère susceptible de gonfler dans la solution de sel conducteur, et
- un électrolyte consistant en un gel de polymère, qui contient une solution d'un sel conducteur et un polymère susceptible de gonfler dans la solution de sel conducteur,
par mélange des composants respectifs,
- les trois couches de matières pour l'anode, l'électrolyte consistant en un gel de polymère et la cathode sont ensuite réunies et
- l'anode, l'électrolyte consistant en un gel de polymère et la cathode sont appliqués par laminage sur des films de collecteurs.

2. Procédé selon la revendication 1, **caractérisé en ce que** l'électrolyte consistant en un gel de polymère contient de 20 à 60% en poids de polymère et de 80 à 40% en poids de solution de sel conducteur.

3. Procédé selon la revendication 1 ou 2, **caractérisé en ce que** le même polymère est contenu dans les matières actives d'électrodes et dans l'électrolyte consistant en un gel de polymère.

4. Procédé selon l'une quelconque des revendications 1 à 3, **caractérisé en ce que** le polymère est un mélange de polymères constitué de 40 à 95% en poids de poly[difluorure de vinylidène-hexafluoropropylène] (PVF-HFP) et de 60 à 5% en poids de poly(méthacrylate de méthyle) (PMMA).

5. Procédé selon la revendication 4, **caractérisé en ce que** le mélange de polymères contient de 60 à 85% en poids de PVF-HFP et de 40 à 15% en poids de PMMA.

6. Procédé selon l'une quelconque des revendications 1 à 5, **caractérisé en ce qu'**on utilise en tant que solvant pour la solution de sel conducteur du carbonate d'éthylène, du carbonate de propylène, du carbonate de diméthyle, du carbonate de diéthyle, de la N-méthylpyrrolidone ou de la γ-butyrolactone, ou un mélange binaire ou ternaire de ceux-ci.

7. Procédé selon l'une quelconque des revendications 1 à 6, **caractérisé en ce qu'**on utilise en tant que sel conducteur de la solution de sel conducteur un sel de lithium choisi parmi LiClO₄, LiPF₆ et LiCF₃SO₃.

8. Procédé selon l'une quelconque des revendications 1 à 7, **caractérisé en ce qu'**on utilise en tant que matériau apte à l'intercalation de la matière active d'anode du graphite naturel ou synthétique ou un mélange de ceux-ci.

9. Procédé selon l'une quelconque des revendications 1 à 7, **caractérisé en ce qu'**on utilise en tant qu'oxyde de métal de transition apte à l'intercalation de la matière active de cathode LiCoO₂, LiNiO₂ ou LiMn₂O₄.

10. Pile rechargeable au lithium-polymère, **caractérisée par** la structure suivante :
- un film collecteur,
- une matière active de cathode,
- un électrolyte consistant en un gel de polymère,
- une matière active d'anode et
- un film collecteur
pouvant être fabriquée par un procédé pour piles rechargeables au lithium-polymère qui s'effectue sans utilisation de solvants porteurs, et les composants, comme décrit dans la revendication 1, sont appliqués par laminage.

11. Pile au lithium-polymère selon la revendication 10, pouvant être fabriquée par un procédé tel que défini dans une ou plusieurs des revendications 2 à 9.
